# EUROPEAN PATENT APPLICATION

(11) **EP 4 826 343 A1**
(43) Date of publication of application: **21.10.2026**
(21) Application number: 24903569.2
(22) Date of filing: 03.12.2024
(51) Int. Cl.: G01K 11/322, G01D 5/353, G01L 1/24

(54) **MEASUREMENT DEVICE AND MEASUREMENT METHOD**

(30) Priority: 12.12.2023 JP 2023209038
(71) Applicant: Nantional Univeristy Corpoation Tokyo of Agriculture and Technology, Tokyo 183-8538 (JP)
(72) Inventor: TANAKA, Yosuke, Fuchu-shi, Tokyo 183-8538 (JP); SEI, Daichi, Fuchu-shi, Tokyo 183-8538 (JP)
(74) Representative: MERH-IP Matias Erny Reichl Hoffmann Patentanwälte PartG mbB
(86) International application number: PCT/JP2024/042763
(87) International publication number: WO 2025/126912

(57) **Abstract**

Provided is a measurement device and the like capable of improving convenience while simplifying a device configuration.

A measurement device branches light from a laser light source into two beams of light, modulates intensity of one of the beams of light to generate pump light that is pulsed light including two frequency components, shifts a frequency of the other beam of light to generate probe light, combines the probe light with light emitted from one end side of an optical fiber being a measurement target when the pump light is incident on the optical fiber from the one end side, detects a beat signal between Brillouin scattered light generated in a frequency band between the two frequency components and the probe light, and measures temperature or strain of the optical fiber based on the detected beat signal. A frequency difference between the two frequency components is set such that a Brillouin gain spectrum generated on a low frequency side of a higher frequency component and a Brillouin loss spectrum generated on a high frequency side of a lower frequency component, of the two frequency components, overlap each other on a frequency axis.

## Description

### [Technical Field]

The present invention relates to a measurement device and a measurement method for measuring temperature or strain of an optical fiber.

### [Background Art]

Conventionally, many studies have been conducted on distributed sensor techniques using Brillouin scattering in optical fibers. Distributed Brillouin sensing utilizes the fact that a Brillouin gain spectrum, which is a frequency area where Brillouin scattering occurs strongly, changes in proportion to strain and temperature. In a Brillouin analysis method, which is one of representative methods, probe light is incident on an optical fiber from the opposite end (the end opposite to the end on which pump light is incident), and a change in Brillouin gain spectrum is observed at a relatively high signalto-noise ratio. However, in order to observe the Brillouin gain spectrum, it is necessary to perform a frequency sweep of the probe light, and there is a problem that it takes time to perform the frequency sweep. In Brillouin reflectometry such as Brillouin optical time domain reflectometry (BOTDR), which is another representative method, probe light is not incident on an optical fiber, but heterodyne interference is caused with Brillouin scattered light from the optical fiber, and a beat signal obtained by photoelectric conversion in a photodetector is input to an electrical spectrum analyzer to observe a change in the Brillouin gain spectrum. However, the electrical spectrum analyzer including a high-frequency circuit is expensive.

Further, proposed are a method of collectively acquiring a Brillouin gain spectrum using pump light and probe light composed of multi-frequency light, and a method of appropriately shaping a spectrum of probe light while using pump light and probe light similarly composed of multi-frequency light to utilize a change in optical power to be finally received in proportion to temperature or strain. As a result, although a configuration without a frequency sweep is realized, in the method of shaping a spectrum of light including a large number of frequency components, a device for performing the spectrum shaping is required, and thus the number of system components increases. In addition, a study has been conducted on a method of using an area in which a change in Brillouin gain spectrum can be regarded as linear with respect to a frequency. However, such an area is narrow.

In addition, a method has been proposed in which measurement is easily realized with fewer system components by using a Brillouin gain spectrum and a Brillouin loss spectrum obtained by single-frequency pump light, and two-frequency probe light.

### [Citation List]

### [Non Patent Literature]

[NPL 1] Y. Tanaka and Y. Ozaki, "Brillouin frequency shift measurement with virtually controlled sensitivity," Appl. Phys. Exp. 10, 062504 (2017).
[NPL 2] Y. Endo and Y. Tanaka, "Sensitivity enhancement of distributed Brillouin fiber optic sensing using two-frequency pump and probe," SPIE Conf 11525. on Future Sensing Technologies, Paper 11525-3 (2020).
[NPL 3] A. Voskoboinik, J. Wang, B. Shamee, S. R. Nuccio, L. Zhang, M. Chitgarha, A. E. Willner, and M. Tur, "SBS-based fiber optical sensing using frequencydomain simultaneous tone interrogation," J. Lightwave Technol. 29, 1729-1735 (2011).
[NPL 4] C. Jin, L. Wang, Y. Chen, N. Guo, W. Chung, H. Au, Z. Li, H-Y. Tam, and C. Lu, "Single-measurement digital optical frequency comb based phase-detection Brillouin optical time domain analyzer," Opt. Exp. 25, 9213-9224 (2017).
[NPL 5] Y. Tanaka, Y. Ozaki, and Y. So, "Scanless Brillouin gain spectrum measurement based on multiheterodyne detection," in Tech. Digest of International Conf. on Optical Fiber Sensors 2018, TuE88 (2018).
[NPL 6] Y. Tanaka and T. Hasegawa, "Brillouin optical time domain analysis using spectrally reshaped 12-GHz spacing multimode pump and probe," Conference on Lasers and Electro-Optics (CLEO) 2020, paper SF3P.7 (2020).
[NPL 7] Y. Peled, A. Motil, L. Yaron, and M. Tur, "Slope-assisted fast distributed sensing in optical fibers with arbitrary Brillouin profile," Opt. Express 19, 19845-19854 (2011).
[NPL 8] H. Lee, N. Hayashi, Y. Mizuno, and K. Nakamura, "Slope-assisted Brillouin optical correlation-domain reflectometry: proof of concept," Photon. Jour. 8, 6802807 (2016).
[NPL 9] K. Hoshino, D. Saito, Y. Endo, T. Hasegawa, and Y. Tanaka, "Brillouin gain spectrum manipulation using multifrequency pump and probe for slope-assisted BOTDA with wider dynamic range," Applied Physics Express, vol.15, 022009, 2022.

### [Summary of Invention]

### [Technical Problem]

Since the method using two-frequency probe light has a configuration in which probe light is incident on the optical fiber from the opposite end (the end opposite to the end on which pump light is incident), there is room for improvement from the viewpoint of convenience.

The present invention has been made in view of the above problems, and an object of the present invention is to provide a measurement device and the like capable of improving convenience while simplifying a device configuration.

### [Solution to Problem]

(1) The present invention relates to a measurement device that includes: a branching unit that branches light from a laser light source into two beams of light; an optical modulation unit that modulates intensity of one of the beams of light to generate pump light that is pulsed light including two frequency components; an optical frequency shifting unit that shifts a frequency of the other beam of light to generate probe light; an optical detection unit that receives light obtained by combining the probe light with light emitted from one end side of an optical fiber being a measurement target when the pump light is incident on the optical fiber from the one end side, and detects a beat signal between Brillouin scattered light generated in a frequency band between the two frequency components and the probe light; and a processing unit that measures temperature or strain of the optical fiber based on the beat signal detected by the optical detection unit, and a frequency difference between the two frequency components is set such that a Brillouin gain spectrum generated on a low frequency side of a higher frequency component of the two frequency components and a Brillouin loss spectrum generated on a high frequency side of a lower frequency component of the two frequency components overlap each other on a frequency axis.

Further, the present invention relates to a measurement method that includes: a branching step of branching light from a laser light source into two beams of light; an optical modulation step of modulating intensity of one of the beams of light to generate pump light that is pulsed light including two frequency components; an optical frequency shifting step of shifting a frequency of the other beam of light to generate probe light; an optical detection step of receiving light obtained by combining the probe light with light emitted from one end side of an optical fiber being a measurement target when the pump light is incident on the optical fiber from the one end side, and detecting a beat signal between Brillouin scattered light generated in a frequency band between the two frequency components and the probe light; and a processing step of measuring temperature or strain of the optical fiber based on the beat signal detected in the optical detection step, and a frequency difference between the two frequency components is set such that a Brillouin gain spectrum generated on a low frequency side of a higher frequency component of the two frequency components and a Brillouin loss spectrum generated on a high frequency side of a lower frequency component of the two frequency components overlap each other on a frequency axis.

According to the present invention, since the light entering the optical fiber is only the pump light incident on the optical fiber from the one end side, it is possible to further improve convenience while simplifying the device configuration.

(2) Further, in the measurement device and the measurement method according to the present invention, the processing unit (the processing step) may measure a temperature distribution or a strain distribution of the optical fiber based on a temporal change in the beat signal detected by the optical detection unit (in the optical detection step).

According to the present invention, it is possible to measure the temperature distribution or strain distribution from the temporal change in the beat signal without requiring a frequency sweep.

### [Brief Description of Drawings]

[Fig. 1] Fig. 1 is a diagram illustrating a configuration of a measurement device according to the present embodiment.
[Fig. 2] Fig. 2 is a diagram illustrating a relationship among pump light, a Brillouin gain spectrum, a Brillouin loss spectrum, Brillouin scattered light, and probe light.
[Fig. 3] Fig. 3 is a diagram illustrating an experimental system for confirming a principle of a method of the present embodiment.
[Fig. 4] Fig. 4 is a diagram illustrating an experimental result for confirming the principle of the method of the present embodiment.
[Fig. 5] Fig. 5 is a diagram illustrating a configuration example of a measurement device in a case where probe light is not used.

### [Description of Embodiments]

Hereinafter, embodiments of the present invention will be described. Note that the present embodiments to be described below do not unreasonably limit the contents of the present invention described in the claims. In addition, not all the configurations to be described in the present embodiments are essential configuration requirements of the present invention.

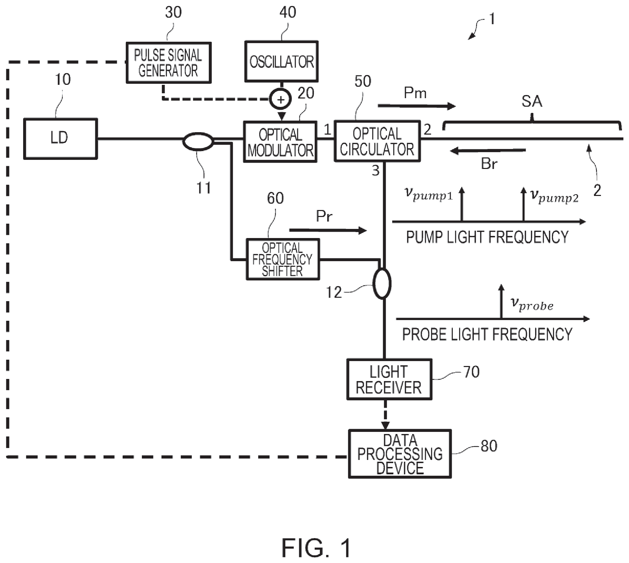

Fig. 1 is a diagram illustrating a configuration of a measurement device according to the present embodiment. A measurement device 1 is a device that measures temperature or strain of a sensing area SA (measurement target) of an optical fiber 2, and includes a laser light source 10 of a single wavelength (single mode), an optical coupler 11 (branching unit), an optical modulator 20 (optical modulation unit), a pulse signal generator 30, an oscillator 40, an optical circulator 50, an optical frequency shifter 60 (optical frequency shifting unit), an optical coupler 12 (combining unit), a light receiver 70 (optical detection unit), and a data processing device 80 (processing unit).

The optical coupler 11 branches light from the laser light source 10 into two beams of light so as to have a predetermined branching ratio (for example, 1:1).

The optical modulator 20 modulates intensity of one beam of light branched by the optical coupler 11 to generate pump light Pm that is pulsed light including two frequency components (center frequencies νₚᵤₘₚ₁ and νₚᵤₘₚ₂). The pulse signal generator 30 generates an intensity modulation signal (pulse signal) for pulsing, and the oscillator 40 generates an intensity modulation signal for generating two frequencies. The pulse signal from the pulse signal generator 30 and the intensity modulation signal from the oscillator 40 are combined and supplied to the optical modulator 20. When a Mach-Zehnder type optical modulator is used as the optical modulator 20, a frequency component of incident light can be suppressed by controlling a bias voltage, and only a sideband component can be generated. At this time, a frequency difference (frequency interval) between the two frequency components of the pump light Pm is twice the frequency of the oscillator 40. Further, the frequency difference between the two frequency components of the pump light Pm is set such that a Brillouin gain spectrum generated on a low frequency side of the higher frequency component (center frequency νₚᵤₘₚ₂) of the two frequency components and a Brillouin loss spectrum generated on a high frequency side of the lower frequency component (center frequency νₚᵤₘₚ₁) of the two frequency components overlap each other on a frequency axis. Note that the optical modulation unit may include an optical modulator for pulsing (an optical modulator that performs intensity modulation based on the pulse signal from the pulse signal generator 30) and an optical modulator for generating two frequencies (an optical modulator that performs intensity modulation based on the intensity modulation signal from the oscillator 40). In this case, as the optical modulator for pulsing, in addition to a Mach-Zehnder type optical modulator, an acousto-optic modulator (AOM), or an optical modulator based on a semiconductor optical amplifier (SOA) can be used.

The optical circulator 50 outputs the pump light Pm, which is input to a first port, from a second port to guide the pump light Pm to one end side of the sensing area SA, and outputs the light (light including Brillouin scattered light Br generated in a frequency band between the two frequency components of the pump light Pm), which is emitted from the one end side of the sensing area SA and input to the second port, from a third port to guide the light to the optical coupler 12. Note that the optical circulator 50 may include an optical isolator and an optical coupler.

The optical frequency shifter 60 shifts the frequency of the other beam of light branched by the optical coupler 11 to generate probe light Pr. A frequency shift amount by the optical frequency shifter 60 is set so that the frequency (ν_{probe}) of the probe light Pr does not overlap the spectrum of the Brillouin scattered light Br. As the optical frequency shifter 60, an acousto-optic modulator may be used, or an optical modulator and an optical wavelength filter may be used.

The optical coupler 12 combines the light emitted from the one end side of the sensing area SA and output from the third port of the optical circulator 50, with the probe light Pr emitted from the optical frequency shifter 60. The light receiver 70 receives the light combined by the optical coupler 12 and detects a beat signal between the Brillouin scattered light Br and the probe light Pr. The intensity of the beat signal detected (optical heterodyne detection) by the light receiver 70 is output as an electrical signal and input to the data processing device 80.

The data processing device 80 is a computer including a processor (a CPU and the like) and a storage unit (a RAM, a hard disk, and the like), and calculates temperature or strain of the optical fiber 2 (sensing area SA) based on the signal intensity detected by the light receiver 70. For example, a function that approximates a relationship (for example, a proportional relationship) between the signal intensity and the temperature or strain is obtained by pre-calibration, and the temperature or strain of the sensing area SA is obtained by substituting the signal intensity detected by the light receiver 70 into the function. In addition, the data processing device 80 calculates a temperature distribution or a strain distribution of the sensing area SA based on a temporal change in the signal intensity detected by the light receiver 70. A length over which light propagates in one pulse period of the pump light Pm corresponds to a length of the sensing area SA. That is, the distribution of temperature or strain in the sensing area SA can be measured from the change in the signal intensity measured within one pulse period of the pump light Pm. Note that generation timing of each pulse of the pump light Pm is supplied as a trigger signal from the pulse signal generator 30.

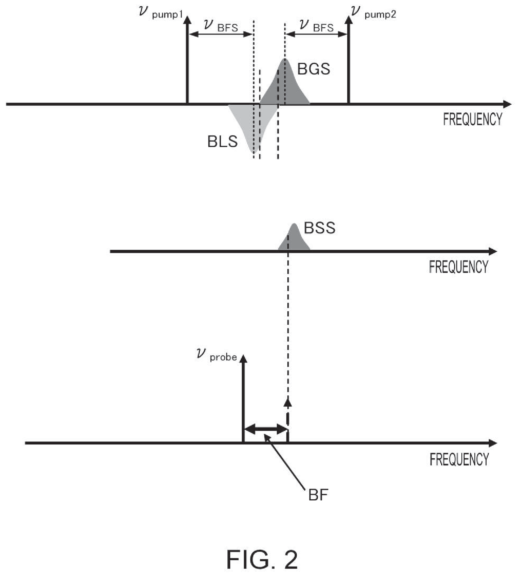

As illustrated in Fig. 2, in the optical fiber 2 (sensing area SA), the Brillouin gain spectrum (BGS) is generated on the low frequency side of the higher frequency component (center frequency νₚᵤₘₚ₂), and the Brillouin loss spectrum (BLS) is generated on the high frequency side of the lower frequency component (center frequency νₚᵤₘₚ₁), of the two frequency components of the pump light Pm. The frequency difference between the two frequency components (νₚᵤₘₚ₁ and νₚᵤₘₚ₂) is set such that the BGS and the BLS overlap on the frequency axis, which reduces the gain (Brillouin gain) of the BGS and reduces the intensity (power) of the Brillouin scattered light Br generated in the frequency band of the BGS. BSS illustrated in Fig. 2 is a spectrum of the Brillouin scattered light Br with reduced power. A difference ν_{BFS} between νₚᵤₘₚ₂ and the center frequency of the BGS (and a difference ν_{BFS} between νₚᵤₘₚ₁ and the center frequency of the BLS) are called Brillouin frequency shift. The Brillouin frequency shift ν_{BFS} changes in proportion to the change in the temperature or strain of the sensing area SA. That is, due to the change in the temperature or strain of the sensing area SA, ν_{BFS} changes and the BGS and the BLS move toward or away from each other, so that the gain of the BGS varies, thereby changing the intensity of the Brillouin scattered light Br. By using this phenomenon, measurement of the temperature or strain of the sensing area SA can be easily realized from measurement of the optical power.

The probe light Pr (center frequency ν_{probe}) is generated by shifting the frequency of light from the laser light source 10. This frequency shift ensures that ν_{probe} does not overlap the BSS. In the light receiver 70, the beat signal between the Brillouin scattered light Br and the probe light Pr is observed. Fig. 2 illustrates a beat frequency BF between the Brillouin scattered light Br and the probe light Pr. The data processing device 80 observes a temporal change in a beat signal component by observing the signal intensity of a specific frequency component of the beat signal. Note that a change in the intensity of the entire beat signal may be observed. The intensity of the beat signal changes due to a variation in the gain of the BGS (a change in the temperature or strain of the sensing area SA). If a relationship between the intensity of the beat signal and the temperature or strain of the sensing area SA is obtained by calibration in advance, the temperature or strain of the sensing area SA can be measured from the observed intensity of the beat signal using the calibration result.

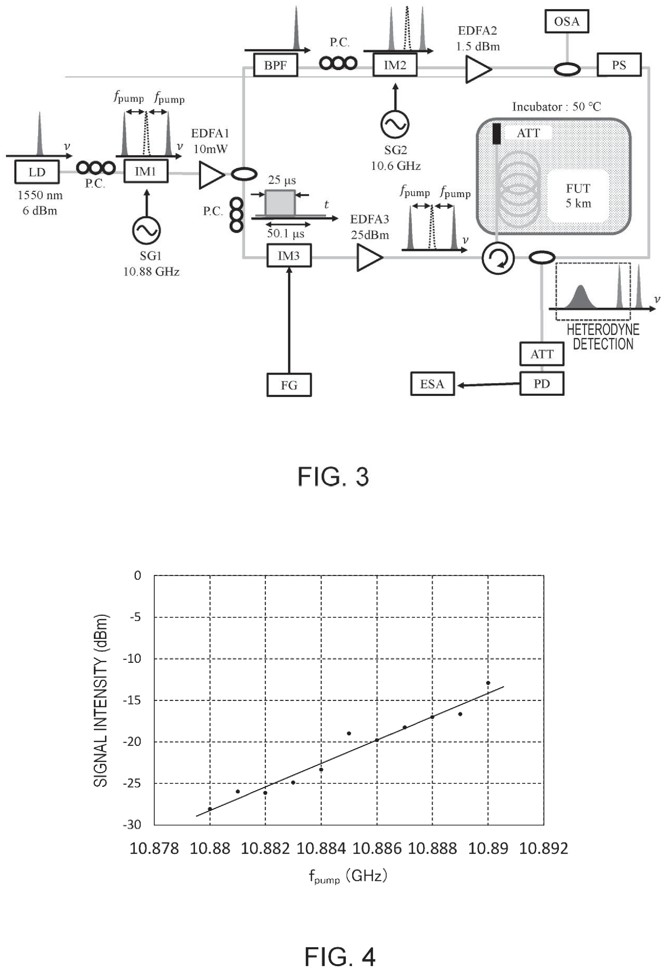

Fig. 3 is a diagram illustrating an experimental system for confirming the principle of a method of the present embodiment. In Fig. 3, LD is a single mode laser light source, IM1 to IM3 are optical intensity modulators, SG1 and SG2 are oscillators, EDFA1 to EDFA3 are optical amplifiers, BPF is an optical band pass filter, OSA is an optical spectrum analyzer, PS is a polarization scrambler, FG is an arbitrary waveform generator, ATT is an attenuator, PD is a photodetector, ESA is an electrical spectrum analyzer, and FUT is a fiber to be measured (sensing area SA).

Light from the single mode laser light source LD having a wavelength of 1.55 µm was branched into two beams of light by an optical fiber coupler (3 dB coupler). An upper optical path of the experimental system is an optical path for generating the probe light Pr, and a lower optical path is an optical path for generating the pump light Pm. The fiber to be measured FUT was an optical fiber of 5 km, and the temperature was kept constant at 50°C in an incubator.

The intensity of the light from the laser light source LD was modulated by the optical intensity modulator IM1 to obtain light having two frequency components, and after the branching, in the upper optical path, the component on the high frequency side was extracted by the optical band pass filter BPF, the intensity of the light was modulated by the optical intensity modulator IM2 to obtain light having two frequency components, and the component on the low frequency side was defined as the probe light Pr. The component on the high frequency side becomes a high frequency signal when optical heterodyne detection is performed, and thus the component is not electrically detected. An intensity modulation frequency in the optical intensity modulator IM1 was set to 10.88 GHz, and the intensity modulation frequency in the optical intensity modulator IM2 was set to 10.6 GHz. As a result, the frequency of the light from the laser light source LD was shifted by 280 MHz (10.88 - 10.6 = 0.28 GHz) to generate the probe light Pr. In the lower optical path, the intensity of the branched light (light having two frequency components) was modulated by the optical intensity modulator IM3 driven by a pulse-shaped modulation signal to generate the pump light Pm that is pulsed light having a pulse width of 25 µs and a period of 50.1 µs.

The spectrum diagram illustrated in the lower right of Fig. 3 is a diagram illustrating a state of the optical heterodyne detection (inside the dotted line). This illustrates a positional relationship between the Brillouin scattered light Br and the probe light Pr on the frequency axis, and is not to scale. The beat frequency between the Brillouin scattered light Br and the probe light Pr by the optical heterodyne detection is about 200 MHz, and the frequency difference between the probe light Pr (the component on the low frequency side of the two frequency components) and the component on the high frequency side that is not detected is 21.2 GHz in the example of Fig. 3.

In the present experiment, the frequency difference between the two frequency components of the pump light Pm was changed such that the relative position on the frequency axis of the Brillouin gain spectrum BGS generated on the low frequency side of the higher frequency component and the Brillouin loss spectrum BLS generated on the high frequency side of the lower frequency component, of the two frequency components of the pump light Pm, changes (the gain of the BGS changes), and the signal intensity (an integral value of the entire spectrum of the beat signal) detected by the photodetector PD at that time was measured. Specifically, the change in the signal intensity was measured when a frequency difference fₚᵤₘₚ between an optical source frequency and the center frequency νₚᵤₘₚ₂ of the component on the high frequency side (the center frequency νₚᵤₘₚ₁ of the component on the low frequency side) of the pump light Pm was changed from 10.88 GHz to 10.89 GHz in 1 MHz steps.

The experimental results are illustrated in Fig. 4. As illustrated in Fig. 4, the experiments have shown that the signal intensity (that is, the power of the Brillouin scattered light Br) increases as fₚᵤₘₚ increases and the overlap of the BGS and the BLS decreases (the gain of the BGS increases). Strictly speaking, an interaction between the BGS and the BLS should be analyzed from a coupling mode equation. However, in a range narrower than a half width of 100 MHz of the BGS or the BLS, it is predicted that the change with respect to the frequency difference between the two frequency components of the pump light Pm becomes monotonic, and in fact, the experimental results were as expected.

According to the method of the present embodiment, by using pump light having two frequency components and setting the frequency difference such that the BGS generated on the low frequency side of the higher frequency component and the BLS generated on the high frequency side of the lower frequency component of the two frequency components overlap each other on the frequency axis, it becomes possible to measure the temperature or strain from the signal intensity and to measure the temperature distribution or strain distribution from the temporal change in the signal intensity without requiring a frequency sweep. In addition, since devices necessary for spectrum shaping of the pump light and the probe light can be omitted, it is possible to simplify the device configuration. In addition, since the light entering the optical fiber is only the pump light incident on the optical fiber from one end side, it is possible to improve convenience as compared with a case where the probe light is incident on the optical fiber from the other end side.

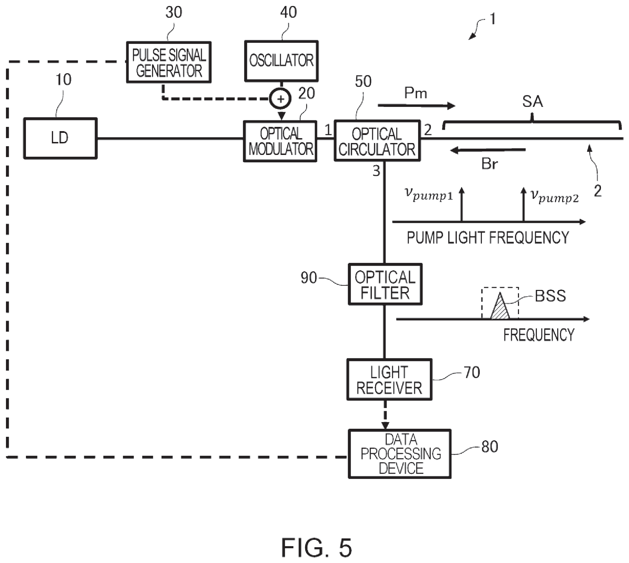

Fig. 5 illustrates a configuration example of the measurement device in a case where the probe light Pr is not used. In Fig. 5, the same configurations as those illustrated in Fig. 1 are denoted by the same reference numerals, and description thereof will be appropriately omitted. In the example illustrated in Fig. 5, the light from the laser light source 10 is incident on the optical modulator 20 without being branched. In addition, the light emitted from one end side of the sensing area SA, input to the second port of the optical circulator 50, and output from the third port is incident on an optical filter 90 (optical wavelength filter). Of the incident light, the optical filter 90 passes only the Brillouin scattered light Br generated in the frequency band between two frequency components of the pump light Pm (extracts only the spectrum BSS of the Brillouin scattered light Br). The light receiver 70 detects the light that has passed through the optical filter 90, and the data processing device 80 calculates the temperature or strain of the optical fiber 2 (sensing area SA) based on optical intensity detected by the light receiver 70. Thus, the device configuration can be further simplified by extracting the Brillouin scattered light Br with the optical filter 90. When the wavelength of the pump light Pm is about 1.5 µm, the Brillouin gain spectrum BGS is generated near a frequency lower by about 11 GHz than each frequency component of the pump light Pm, and the Brillouin loss spectrum BLS is generated near a frequency higher by about 11 GHz than each frequency component. Spectral widths of the Brillouin gain spectrum BGS and the Brillouin loss spectrum BLS are generally less than or equal to 100 MHz, and the frequencies of these spectra are shifted by about 1 MHz for a temperature change of 1 degree and by about 0.05 MHz for a strain change of 10⁻⁶. A transmission bandwidth (in a case of a transmission type) or a reflection bandwidth (in a case of a reflection type) of the optical filter 90 to be used is desirably a bandwidth of 0.1 nm or less. In the case of a transmission type, transmitted light is detected by the light receiver 70, and in the case of a reflection type, reflected light is detected by the light receiver 70. For such an optical filter, for example, an optical fiber diffraction grating (FBG) having a band of 0.1 nm or less can be used.

It is noted that the present invention is not limited to the above-described embodiments, and various modifications can be made. The present invention includes substantially the same configurations (for example, configurations having the same function, method, and result, or configurations having the same purpose and effect) as the configurations described in the embodiments. In addition, the present invention includes configurations in which non-essential portions of the configurations described in the embodiments are replaced. In addition, the present invention includes configurations that achieve the same action and effect as the configurations described in the embodiments or configurations that can achieve the same object. In addition, the present invention includes configurations obtained by adding a known technique to the configurations described in the embodiments.

### REFERENCE SIGNS LIST

- 1: Measurement device
- 2: Optical fiber
- 10: Laser light source
- 11, 12: Optical coupler
- 20: Optical modulator
- 30: Pulse signal generator
- 40: Oscillator
- 50: Optical circulator
- 60: Optical frequency shifter
- 70: Light receiver
- 80: Data processing device
- 90: Optical filter

## Claims

1. A measurement device comprising:
a branching unit that branches light from a laser light source into two beams of light;
an optical modulation unit that modulates intensity of one of the beams of light to generate pump light that is pulsed light including two frequency components;
an optical frequency shifting unit that shifts a frequency of the other beam of light to generate probe light;
an optical detection unit that receives light obtained by combining the probe light with light emitted from one end side of an optical fiber being a measurement target when the pump light is incident on the optical fiber from the one end side, and detects a beat signal between Brillouin scattered light generated in a frequency band between the two frequency components and the probe light; and
a processing unit that measures temperature or strain of the optical fiber based on the beat signal detected by the optical detection unit, wherein
a frequency difference between the two frequency components is set such that a Brillouin gain spectrum generated on a low frequency side of a higher frequency component of the two frequency components and a Brillouin loss spectrum generated on a high frequency side of a lower frequency component of the two frequency components overlap each other on a frequency axis.

2. A measurement device comprising:
an optical modulation unit that modulates intensity of light from a laser light source to generate pump light that is pulsed light including two frequency components;
an optical filter unit that extracts Brillouin scattered light generated in a frequency band between the two frequency components, from light emitted from one end side of an optical fiber being a measurement target when the pump light is incident on the optical fiber from the one end side;
an optical detection unit that detects light extracted by the optical filter unit; and
a processing unit that measures temperature or strain of the optical fiber based on optical intensity detected by the optical detection unit, wherein
a frequency difference between the two frequency components is set such that a Brillouin gain spectrum generated on a low frequency side of a higher frequency component of the two frequency components and a Brillouin loss spectrum generated on a high frequency side of a lower frequency component of the two frequency components overlap each other on a frequency axis.

3. The measurement device according to claim 1, wherein
the processing unit measures a temperature distribution or a strain distribution of the optical fiber based on a temporal change in the beat signal detected by the optical detection unit.

4. The measurement device according to claim 1 or 2, wherein
the optical modulation unit generates the pump light by performing intensity modulation based on a signal obtained by combining a pulse signal from a pulse signal generator and an intensity modulation signal from an oscillator.

5. The measurement device according to claim 1 or 2, wherein
the optical modulation unit is a Mach-Zehnder type optical modulator.

6. A measurement method comprising:
a branching step of branching light from a laser light source into two beams of light;
an optical modulation step of modulating intensity of one of the beams of light to generate pump light that is pulsed light including two frequency components;
an optical frequency shifting step of shifting a frequency of the other beam of light to generate probe light;
an optical detection step of receiving light obtained by combining the probe light with light emitted from one end side of an optical fiber being a measurement target when the pump light is incident on the optical fiber from the one end side, and detecting a beat signal between Brillouin scattered light generated in a frequency band between the two frequency components and the probe light; and
a processing step of measuring temperature or strain of the optical fiber based on the beat signal detected in the optical detection step, wherein
a frequency difference between the two frequency components is set such that a Brillouin gain spectrum generated on a low frequency side of a higher frequency component of the two frequency components and a Brillouin loss spectrum generated on a high frequency side of a lower frequency component of the two frequency components overlap each other on a frequency axis.

7. A measurement method comprising:
an optical modulation step of modulating intensity of light from a laser light source to generate pump light that is pulsed light including two frequency components;
an optical filtering step of extracting Brillouin scattered light generated in a frequency band between the two frequency components, from light emitted from one end side of an optical fiber being a measurement target when the pump light is incident on the optical fiber from the one end side;
an optical detection step of detecting light extracted in the optical filtering step; and
a processing step of measuring temperature or strain of the optical fiber based on optical intensity detected in the optical detection step, wherein
a frequency difference between the two frequency components is set such that a Brillouin gain spectrum generated on a low frequency side of a higher frequency component of the two frequency components and a Brillouin loss spectrum generated on a high frequency side of a lower frequency component of the two frequency components overlap each other on a frequency axis.
